# EUROPÄISCHE PATENTANMELDUNG

(11) **EP 1 462 574 A2**
(43) Veröffentlichungstag der Anmeldung: **29.09.2004**
(21) Anmeldenummer: 04007306.6
(22) Anmeldetag: 26.03.2004
(51) Int. Cl.: E02B 8/04, E06B 5/16

(54) **Vorrichtung und Verfahren zum Abdichten einer Durchlassöffnung**

(30) Priorität: 28.03.2003 DE 10314372
(71) Anmelder: Schmidt, Horst, 90475 Nürnberg (DE)
(72) Erfinder: Schmidt, Horst, 90475 Nürnberg (DE)
(74) Vertreter: Stippl, Hubert, Dipl.-Ing.

(57) **Zusammenfassung**

Die vorliegende Erfindung betrifft eine Vorrichtung sowie ein Verfahren zum Abdichten und/oder Verschließen einer Öffnung (4) eines Durchlasses eines Flüssigkeit oder Gas führenden Kanals, Rohrs oder eines Flüssigkeit oder Gas beinhaltenden Behälters mit
- einer Absperreinrichtung,
- einer Einrichtung zum Verfahren der Absperreinrichtung von einer Offen-Stellung in eine Schließ-Stellung sowie
- Mittel (6) zum Abdichten eines Spalts zwischen einer Wand (11) und der Absperreinrichtung im Bereich des Durchlasses oder der Öffnung (4).

Zur Erhöhung der Standzeiten und Reduzierung des Installationsaufwands wird erfindungsgemäß vorgeschlagen, dass die Mittel zum Abdichten (6) über eine Betätigungseinrichtung von einem Passiv- in einen Aktiv-Zustand und umgekehrt bringbar sind.

## Beschreibung

Die vorliegende Erfindung betrifft eine Vorrichtung zum Abdichten und/oder Verschließen einer Öffnung oder eines Durchlasses eines Flüssigkeit oder Gas führenden Kanals, Rohrs oder eines entsprechenden Behälters sowie ein Verfahren zum Abdichten einer solchen Öffnung bzw. eines solchen Durchlasses.

Aus der DE OS 2 128 402 ist ein Kanal- oder Rinnenschieber als Beispiel einer gattungsgemäßen Vorrichtung bekannt. Dieser Kanal- oder Rinnenschieber weist als Absperreinrichtung ein linear hin- bzw. her verschiebbares Schieberblatt sowie eine Betätigungsvorrichtung in Form eines per Hand zu bedienenden Spindeltriebs für Letztere auf. Im Bereich der Öffnung sitzt ein mit der Wandung fest verbundener Rahmen, welcher eine Dichtung trägt. Zum Abdichten des Kanals wird das Schieberblatt mittels des Spindeltriebs aus einer oberen Offen-Stellung in eine untere Schließ-Stellung überführt. Beim Überführen des Schieberblatts in die Schließ-Stellung läuft der seitliche Rahmen desselben an einer im Rahmen befindlichen Dichtung unter Überwindung der Reibung zwischen Rahmen und Dichtung nach unten. Daraus resultiert eine Materialabnutzung im Bereich der Dichtung und daraus folgend eine verkürzte Standzeit bzw. häufige Reparaturzyklen. Darüber hinaus begründet die vorstehend beschriebene Konstruktion eine mangelnde Dichtheit aufgrund in der Regel vorhandener Unebenheiten im Wandungsbereich und/oder Verformungen des Kanal- oder Rinnenschiebers, die mit der bekannten Dichtkonstruktion nicht in ausreichender Weise abgedichtet werden können. Um dieses Problem wiederum in den Griff zu bekommen, sind sehr hohe Anpreßdrucke der Dichtungen erforderlich, was aber wiederum die Materialabnutzung beim Überführen des Schieberblatts von der Schließ-Stellung in die Offen-Stellung und umgekehrt beschleunigt.

Die vorliegende Erfindung hat die Aufgabe, eine gattungsgemäße Vorrichtung, beispielsweise einen Schieber für Wasser oder Abwasserkanäle zur Verfügung zu stellen, bei dem die Reparaturzyklen erniedrigt und damit die Standzeit der betreffenden Vorrichtung erhöht ist. Vor allem aber soll die gattungsgemäße Vorrichtung eine erheblich höhere Dichtigkeit bei geringerer Materialabnutzung und geringerem Anpreßdruck gewährleisten.

Diese Aufgabe wird bei der gattungsgemäßen Vorrichtung dadurch gelöst, dass die Mittel zum Abdichten über eine Betätigungseinrichtung von einem Passiv- in einen Aktiv-Zustand und umgekehrt bringbar sind. Daraus resultiert der Vorteil, dass die Absperreinrichtung zunächst im Passiv-Zustand der Mittel zum Abdichten sozusagen kontaktlos in eine Schließ-Stellung bringbar ist, wodurch die Mittel zum Abdichten nicht oder nur geringfügig mechanischen Belastungen ausgesetzt sind. In der Schließ-Stellung oder zumindest in einem Zeitpunkt kurz vorher können bei der erfindungsgemäßen Vorrichtung mittels der Betätigungseinrichtung die Mittel zum Abdichten von einem Passiv-Zustand in einen Aktiv-Zustand, d. h. in einen Abdichtzustand und umgekehrt gebracht werden. Mechanische Beeinträchtigungen an den Mitteln zum Abdichten während des Öffnungs- und Schließvorgangs sind damit ausgeschlossen.

Zweckmäßigerweise bestehen die Mittel zum Abdichten aus einer Dichtung, die aus dehnbarem Material besteht und einen Hohlraum aufweist, der mit einem flüssigen oder gasförmigen Medium gefüllt ist. Zur Festlegung des Aktiv- oder Passiv-Zustands wird mittels einer eigens hierfür vorgesehenen Betätigungseinrichtung der Druck innerhalb der Dichtung verändert. Diese Art der Abdichtung gewährleistet einen Ausgleich von Unebenheiten sowohl an der Wandung des Bauwerks als auch im Bereich des Schieberblatts unter Einsatz vergleichsweise geringer Kräfte.

Besonders eignet sich als Dichtung eine umlaufende Hohlraumdichtung. Diese ist konstruktiv einfach zu realisieren.

Um die Mittel zum Abdichten von dem Passiv-Zustand in den Aktiv-Zustand und umgekehrt zu bringen, kann entweder Öl, insbesondere lebensmittelechtes Öl, aber auch Wasser als flüssiges Medium oder Luft als gasförmiges Medium vorgesehen sein. Wasser als flüssiges Medium hat den Vorteil, dass es beim Einsatz der Vorrichtung zum Abdichten im Bereich von Wasserleitungen, z. B. Trinkwasserleitungen, keine Verschmutzungen verursacht.

Die Betätigungseinrichtung kann in Form eines von Hand zu bedienenden oder motorisch angetriebenen Kolbens realisiert werden. Alternativ hierzu besteht die Möglichkeit, die Betätigungseinrichtung auch lediglich als einfaches Ventil, beispielsweise zur Öffnung eines unter Druck befindlichen Flüssigkeits- oder Gasbehälters oder als Pumpe vorzusehen.

Um eine mechanische Beeinträchtigung der Dichtung während des Öffnungs- bzw. Schließvorgangs auszuschließen, bilden die Mittel zum Abdichten im Passiv-Zustand zur Wand einen Spalt. Während des Übergangs vom Passiv-Zustand in den Aktiv-Zustand wird durch die Ausdehnung der Mittel zum Abdichten der Spalt überbrückt.

Besonders vorteilhaft ist es, wenn die Einrichtung zum Verfahren der Absperreinrichtung gleichzeitig die Betätigungseinrichtung der Mittel zum Abdichten ansteuert. Hierbei werden bei der Abdichtung weitere zusätzliche Handgriffe durch Verbringen der Absperreinrichtung in die Schließ-Stellung überflüssig.

Gemäß einer vorteilhaften Ausgestaltung der Erfindung liegen die Mittel zum Abdichten an der Absperreinrichtung an, d. h. werden zusammen mit der Absperreinrichtung bewegt. Gleiches gilt für die Betätigungseinrichtung.

Vorteilhafterweise kann durch die Betätigungseinrichtung eine Druckcharakteristik in Form zweier festgelegter Druckniveaus der zweistufige Schließvorgang automatisiert werden.

Als Betätigungseinrichtung für die Mittel zum Abdichten ist zweckmäßigerweise ein Hydraulikzylinder vorgesehen.

Der Hydraulikzylinder weist für den besonderen Einsatzzweck einen ersten Anschluß für die Zulaufleitung mit einem Druckschaltventil sowie einen zweiten Anschluß für die Rücklaufleitung mit einem Rückschlagventil auf. Das Druckschaltventil dient dazu, bei Erreichen eines eingegebenen Druckwertes die Zulaufleitung freizuschalten.

Zweckmäßigerweise vollzieht weiterhin die Einrichtung zum Verfahren der Absperreinrichtung eine Linearbewegung.

Zur Lösung der eingangs genannten Aufgabe wird durch das erfindungsgemäße Verfahren eine Kombination folgender Schritte vorgeschlagen:
(a) die Absperreinrichtung befindet sich in Offen-Stellung,
(b) die Mittel zum Abdichten befinden sich in Passiv-Stellung,
(c) mittels der Einrichtung zum Verfahren der Absperreinrichtung wird die Absperreinrichtung in eine Schließ-Stellung gebracht,
(d) die Mittel zum Abdichten werden über eine Betätigungseinrichtung von der Passiv- in die Aktiv-Stellung gebracht.

Dieses Verfahren unterscheidet sich vom einschlägigen Stand der Technik dadurch, dass es zweistufig (Verfahren der Absperreinrichtung, Aktivierung der Dichtung) abläuft.

Besonders vorteilhaft ist es, wenn die Einrichtung zum Verfahren bei Erreichen der Schließ-Stellung der Absperreinrichtung selbsttätig die Mittel zum Abdichten von dem Passiv-Zustand in den Aktiv-Zustand versetzt.

Die Umschaltung vom Passiv- in den Aktiv-Zustand und umgekehrt erfolgt zweckmäßigerweise durch hydraulische Druckerhöhung bzw. Druckabsenkung und zwar insbesondere ebenfalls automatisch mittels der Einrichtung zum Verfahren der Absperreinrichtung.

Besonders vorteilhaft ist das erfindungsgemäße Verfahren im Bereich der Wasserversorgung sowie Abwassertechnik einsetzbar.

Nachstehend wird anhand von Zeichnungsfiguren eine besondere Ausgestaltung der vorliegenden Erfindung näher erläutert.

Es zeigen:
- Fig. 1: drei unterschiedliche Zustandsdarstellungen der erfindungsgemäßen Vorrichtung in Offen-Stellung, Schließ-Stellung (Mittel zum Abdichten in Passiv-Zustand) sowie Schließ-Stellung (Mittel zum Abdichten in Aktiv-Zustand) jeweils in Seitenansicht sowie
- Fig.2: eine Teil-Schnittdarstellung in horizontaler Ebene durch die erfindungsgemäße Vorrichtung.

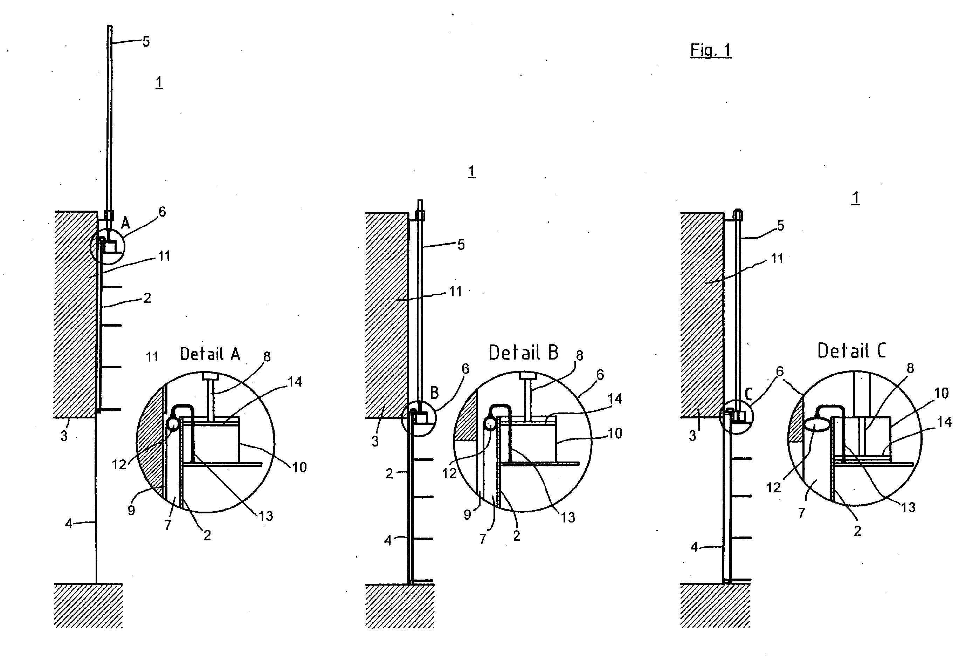

Bezugsziffer 1 in Fig. 1 beschreibt einen sogenannten Absperrschieber als Beispiel der erfindungsgemäßen Vorrichtung zum Abdichten und/oder Verschließen einer Öffnung 4 eines Kanals, z. B. Abwasserkanals.

Hierbei befindet sich eine Absperreinrichtung in Form einer Schieberplatte 2 innerhalb eines (in Figur 1 nicht dargestellten) Rahmens mit ihren Hauptflächen senkrecht zur Fließrichtung des im Kanal 3 befindlichen Wassers. In der in Figur 1 linken Darstellung (Zustand a) ist die Schieberplatte 2 in Offen-Stellung. Betätigt wird die Schieberplatte 2 über einen an der Oberseite derselben angeordneten Antrieb 5, in Figur 1 in Form eines Spindeltriebs, der beispielsweise von Hand zu bedienen ist.

Im Fall der in Figur 1 dargestellten Ausführungsform befindet sich als Mittel zum Abdichten eine Hohlraumdichtung 7 an der Schieberplatte 2, die aus dehnbarem Material besteht und einen Hohlraum 12 aufweist. Die Hohlraumdichtung 7 wird demzufolge zusammen mit der Schieberplatte 2 bewegt. Gleiches gilt für einen Hydraulikzylinder 10 als Betätigungseinrichtung für die Hohlraumdichtung 7. Der Hohlraum 12 steht über eine Zulaufleitung 13, in die ein in der Figur 1 nicht dargestelltes Druckschaltventil eingesetzt ist, mit einem ersten Anschluß an einem Hydraulikzylinder 10 in Verbindung. Daneben ist ein zweiter Anschluß am Hydraulikzylinder 10 für eine Rücklaufleitung mit einem Rückschlagventil (beides in den Figuren nicht dargestellt) vorgesehen.

Die untere Seite der die Schieberplatte 2 beaufschlagenden Spindel des Antriebs 5 steht mit der Kolbenstange 8 des Kolbens 14 des Hydraulikzylinders 10 in Verbindung.

Soll nun eine Schließung des Absperrschiebers vorgenommen werden, wird - wie unter Zustand b in Figur 1 näher erläutert - durch Betätigung des Antriebs 5 die Schieberplatte 2 nach unten in die Öffnung 4 des Kanals 3 verfahren, wobei die Hohlraumdichtung 7 sich noch in einem Passiv-Zustand befindet. Dieser Passiv-Zustand äußert sich bei der in der Figur 1 dargestellten Vorrichtung insbesondere dadurch, dass zwischen der Außenseite der Hohlraumdichtung 7 und der die Öffnung 4 begrenzenden Wand 11 ein Spalt 9 vorgesehen ist. Hierdurch wird gewährleistet, dass bei der Linearbewegung der Schieberplatte 2 nach unten, d. h. in den Bereich der Öffnung 4 keinerlei mechanische Beeinträchtigung der Hohlraumdichtung 7 erfolgt.

Sobald die Schieberplatte 2 ihre Endposition erreicht hat, nimmt die Schieberplatte 2 zwar eine Schließ-Stellung ein, es erfolgt jedoch aufgrund des Spalts 9 noch keine Abdichtung. In diesem Zustand wird durch zusätzliche Betätigung des mit der Kolbenstange 8 in Verbindung stehenden Antriebs 5 der Kolben 14 des Hydraulikzylinders 10 etwas weiter nach unten verfahren, mit der Folge, dass aufgrund des verdrängten Öls eine Ausdehnung der Hohlraumdichtung 7 sich einstellt. Diese Ausdehnung der Hohlraumdichtung 7 gewährleistet eine Überbrückung des Spalts 9 und damit eine ausreichende Abdichtung der Vorrichtung zwischen der Schieberplatte 2 und der Wand 11. Sofern der Schieber 1 wieder geöffnet werden sollte, läuft der Vorgang der Deaktivierung der Hohlraumdichtung 7 entsprechend, d. h. erst nach deaktivierter Hohlraumdichtung wird die Schieberplatte 2 aus der Schließ-Stellung in die Offen-Stellung durch Betätigung des Antriebs 5 verfahren. Vorzugsweise wird lebensmittelechtes Öl verwendet.

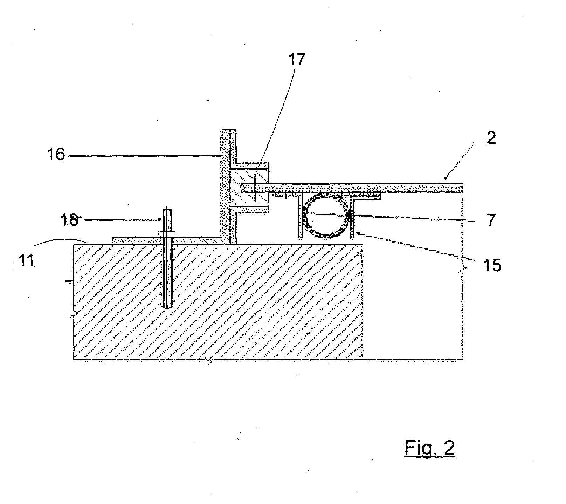

Fig. 2 zeigt in einer Teil-Schnittdarstellung in horizontaler Ebene durch die erfindungsgemäße Vorrichtung den genaueren Aufbau im Bereich der Hohlraumdichtung 7. Letztere befindet sich im Inneren eines aus zwei L-förmigen Winkelflächen bestehenden Begrenzungsrahmens 15. Hierdurch wird erreicht, dass bei Druckbeaufschlagung durch den Hydraulikzylinder 10 die Ausdehnung der Hohlraumdichtung 7 gerichtet zur Wand 11 hin verläuft.

Die Schieberplatte 2 verläuft in einem an beiden Seiten befindlichen, mit der Wand 11 über eine geeignete Verankerung 18 verbundenen Halterahmen 16. Zur Führung der Schieberplatte 2 befinden sich in dem Halterahmen 16 mindestens ein, vorzugsweise eine Mehrzahl von Gleitblöcken 17 aus Kunststoff, die eine geführte Vertikalbewegung der Schieberplatte 2 erlauben. Die Hohlraumdichtung kann bereits im Rahmen deren Herstellungsverfahren entsprechend der Form (z. B. in Rechtecksform) des Begrenzungsrahmens gefertigt sein. Alternativ hierzu können einzelne Schlauchstücke auch segmentweise verklebt und/oder vulkanisiert werden.

Die vorliegende Erfindung gewährleistet für den Abwasserbereich eine Dichtigkeit in Form einer maximalen Leckrate bei Reinwasser je Meter Dichtlinie von < 0,005 1 · s⁻¹ · m⁻¹ nach DIN 19569-4. Für den Trinkwasserbereich gewährleistet die vorliegende Erfindung eine Dichtigkeit nach "Leckrate 3" gemäß DIN 3230 Teil 3.

Die vorliegende Erfindung ermöglicht es, herkömmliche Absperrschieber und dergleichen dahingehend zu verbessern, dass die Standzeiten derselben aufgrund einer reduzierten Austauschnotwendigkeit der Dichtungen erheblich erhöht werden können. Daraus resultiert eine erhebliche Kosteneinsparung beim Betrieb derartiger Schieber. Die vorliegende Erfindung gewährleistet gleichzeitig eine erheblich höhere Dichtigkeit im Vergleich zu bisherigen Vorrichtungen. Dies ist u. a. auch für die Prozeßtechnik von besonderem Vorteil, wenn z. B. Prozeßparameter (z. B. Bakterienaktivität etc.) exakt eingehalten werden müssen, was bei mangelhaften Dichtigkeiten von Absperreinrichtungen bisher ein großes Problem darstellte. Die Idee stellt daher eine ganz besondere Bereicherung des diesbezüglichen Standes der Technik dar.

## Patentansprüche

1. Vorrichtung zum Abdichten und/oder Verschließen einer Öffnung (4) eines Durchlasses eines Flüssigkeit oder Gas führenden Kanals, Rohrs oder eines Flüssigkeit oder Gas beinhaltenden Behälters mit
- einer Absperreinrichtung,
- einer Einrichtung zum Verfahren der Absperreinrichtung von einer Offen-Stellung in eine Schließ-Stellung sowie
- Mittel (6) zum Abdichten eines Spalts zwischen einer Wand (11) und der Absperreinrichtung im Bereich des Durchlasses oder der Öffnung (4),
**dadurch gekennzeichnet, dass**
die Mittel (6) zum Abdichten über eine Betätigungseinrichtung von einem Passiv- in einen Aktiv-Zustand und umgekehrt bringbar sind.

2. Vorrichtung nach Anspruch 1,
**dadurch gekennzeichnet, dass**
die Mittel (6) zum Abdichten eine aus dehnbarem Material bestehende Dichtung mit Hohlraum (12) aufweisen, der mit einem flüssigen oder gasförmigen Medium gefüllt ist und zur Festlegung des Aktiv- oder Passiv-Zustands mittels der Betätigungseinrichtung der Druck innerhalb der Dichtung veränderbar ist.

3. Vorrichtung nach Anspruch 2,
**dadurch gekennzeichnet, dass**
als Dichtung eine umlaufende Hohlraumdichtung (7) vorgesehen ist.

4. Vorrichtung nach Anspruch 1 oder 2,
**dadurch gekennzeichnet, dass**
als flüssiges Medium Öl, insbesondere lebensmittelechtes Öl, oder Wasser vorgesehen ist.

5. Vorrichtung nach Anspruch 2 oder 3,
**dadurch gekennzeichnet, dass**
als gasförmiges Medium Luft vorgesehen ist.

6. Vorrichtung nach einem der vorhergehenden Ansprüche,
**dadurch gekennzeichnet, dass**
als Betätigungseinrichtung ein von Hand zu bedienender oder motorisch angetriebener Kolben, eine Pumpe oder ein Ventil vorgesehen ist.

7. Vorrichtung nach einem der vorhergehenden Ansprüche,
**dadurch gekennzeichnet, dass**
der Übergang vom Passiv- in den Aktiv-Zustand in Schließ-Stellung oder zumindest kurz vor Erreichen der Schließ-Stellung der Absperreinrichtung erfolgt.

8. Vorrichtung nach einem der vorhergehenden Ansprüche,
**dadurch gekennzeichnet, dass**
die Mittel zum Abdichten im Passiv-Zustand zur Wand einen Spalt (9) bilden.

9. Vorrichtung nach einem der Ansprüche 2-8,
**dadurch gekennzeichnet, dass**
die Einrichtung zum Verfahren der Absperreinrichtung gleichzeitig die Betätigungseinrichtung der Mittel zum Abdichten ansteuert.

10. Vorrichtung nach einem der Ansprüche 2-9,
**dadurch gekennzeichnet, dass**
mehrere, vorzugsweise zwei festgelegte Druckniveaus mittels der Betätigungseinrichtung generierbar sind.

11. Vorrichtung nach Anspruch 2,
**dadurch gekennzeichnet, dass**
die Betätigungseinrichtung ein Hydraulikzylinder (10) ist.

12. Vorrichtung nach Anspruch 11,
**dadurch gekennzeichnet, dass**
der Hydraulikzylinder (10) einen ersten Anschluß für die Zulaufleitung (13) mit einem Druckschaltventil sowie einen zweiten Anschluß für die Rücklaufleitung mit einem Rückschlagventil aufweist.

13. Vorrichtung nach einem der vorhergehenden Ansprüche,
**dadurch gekennzeichnet, dass**
die Einrichtung zum Verfahren der Absperreinrichtung eine Linearbewegung der Absperreinrichtung vollzieht.

14. Verfahren zum Abdichten einer Öffnung (4) oder eines Durchlasses eines Flüssigkeit oder Gas führenden Kanals oder eines entsprechenden Behälters unter Verwendung
- einer Absperreinrichtung,
- einer Einrichtung zum Verfahren der Absperreinrichtung von einer Offen-Stellung in eine Schließ-Stellung sowie
- Mittel (6) zum Abdichten eines Spalts zwischen einer Wand und der Absperreinrichtung im Bereich des Durchlasses oder der Öffnung (4),
**gekennzeichnet durch** folgende Schritte:
(a) die Absperreinrichtung befindet sich in Offen-Stellung,
(b) die Mittel zum Abdichten befinden sich in Passiv-Stellung,
(c) mittels der Einrichtung zum Verfahren der Absperreinrichtung wird die Absperreinrichtung in eine Schließ-Stellung gebracht,
(d) die Mittel zum Abdichten werden über eine Betätigungseinrichtung von der Passiv- in die Aktiv-Stellung gebracht.

15. Verfahren nach Anspruch 14,
**dadurch gekennzeichnet, dass**
die Einrichtung zum Verfahren bei Erreichen der Schließ-Stellung der Absperreinrichtung selbsttätig die Mittel zum Abdichten von dem Passiv-Zustand in den Aktiv-Zustand versetzt.

16. Verfahren nach Anspruch 14 oder 15,
**dadurch gekennzeichnet, dass**
die Umschaltung von Passiv- in Aktiv-Zustand und umgekehrt durch hydraulische Druckerhöhung bzw. -absenkung erfolgt.

17. Verfahren nach einem der vorhergehenden Ansprüche 14-16,
**dadurch gekennzeichnet, dass**
es sich bei dem Flüssigkeit führenden Kanal um einen Wasserkanal, insbesondere um einen Abwasserkanal handelt.
